# EUROPÄISCHE PATENTANMELDUNG

(11) **EP 0 787 784 A2**
(43) Veröffentlichungstag der Anmeldung: **06.08.1997**
(21) Anmeldenummer: 96117149.3
(22) Anmeldetag: 25.10.1996
(51) Int. Cl.: C09K 21/02

(54) **Formteile aus intumeszierenden Mischungen und Verfahren zur Herstellung derselben**

(30) Priorität: 31.01.1996 DE 19603424
(71) Anmelder: Schneider, Friedhelm, D-51580 Reichshof (DE)
(72) Erfinder: Schneider, Friedhelm, D-51580 Reichshof (DE)
(74) Vertreter: Missling, Arne, Dipl.-Ing.

(57) **Zusammenfassung**

Für die einfache und kostengünstige Herstellung intumeszierender Formteile werden diese aus Mischungen aus Thermoplasten und Blähgraphit hergestellt, wobei die Anteile der Thermoplasten zwischen 30 und 60 Gew.-% und die des Blähgraphits zwischen 40 und 70 Gew.-% liegen. Die Herstellung erfolgt vorteilhaft mittels eines beheizten Extruders, wobei die Formen unmittelbar vom Extruder befüllt werden.

## Beschreibung

Die Erfindung betrifft Mischungen für die Herstellung von intumeszierenden Formteilen sowie ein Verfahren zur Herstellung der Mischungen sowie Formteile aus diesen Mischungen.

Formteile aus intumeszierenden Mischungen werden für den Brandschutz eingesetzt, um im Brandfall Öffnungen so zu verschließen, daß ein Feuerdurchtritt verhindert wird. Diese Formteile quellen, wenn sie im Brandfall auf eine bestimmte Reaktionstemperatur erhitzt werden, auf und verschließen aufgrund dieser Volumenvergrößerung die vorhandenen Öffnungen.

So werden diese Formteile z. B. bei Brandschutztüren als Manschetten und Streifen zum Verschließen von Kunststoffrohren eingesetzt, als Lüftungsgitter, als Brandschutzplatten, etc. Die intumeszierende Wirkung wird dadurch erreicht, daß als Zusatzstoffe Natriumsilikat, Blähgraphit, Vermeculite oder Phosphate zugesetzt werden, die intumeszieren, d. h. bei starker Hitze aufschäumen. Je nach Rohstoffkombination und Konzentration können solche Produkte einen beachtlichen Druck beim Verschließen von Öffnungen ausüben.

Diese intumeszierenden Formteile wurden bisher aus Polymeren hergestellt und zwar Duroplasten, wie Epoxidharzen, Polyurethanharzen, Polyester, Polyvinylchlorid, und Polyvinylacetat oder plastischen Polymeren wie Butylkautschuk und Elastomeren wie Syntesekautschuke.

Eine rationale Fertigung ist mit diesen Polymeren jedoch nicht möglich, da es sich hier um aushärtbare Mischungen handelt, wobei die Vormischungen entweder großflächig ausgestrichen, getrocknet und dann zugeschnitten werden, wie dies beispielsweise bei Polyvinylacetat der Fall ist. Bei Verwendung von Epoxidharz und Polyurethan müssen diese mit einem Härter gemischt, in Formen gegossen und heiß ausgehärtet werden. Bei den gummiähnlichen Produkten werden die Vormischungen aus Knetern auf Kalandern ausgewalzt und dann zugeschnitten. Diese Art der Herstellung ist aufwendig und führt zu teuren Produkten, die entsprechend schwer zu vermarkten sind.

Der Erfindung liegt die Aufgabe zugrunde, eine Mischung sowie ein Verfahren zur Herstellung von intumeszierenden Formteilen sowie aus diesen Mischungen hergestellte Formteile vorzuschlagen, das bzw. die zum einen kostengünstig ist/sind, zu Formteilen mit guter Beständigkeit gegenüber Witterungseinflüssen mit glatten und dichten Oberflächen führt, die leicht zu reinigen und zu dekontaminieren sind.

Diese Aufgabe wird erfindungsgemäß durch eine Mischung gelöst, die dadurch gekennzeichnet ist, daß sie aus Thermoplasten besteht, deren Anteil in Gew.-% zwischen 30 und 60 % liegt, daß als Blähmittel Blähgraphit in Konzentrationen von 40 bis 70 % verwendet wird, wobei auch als Rest Füllstoffe, vorteilhaft anorganische Füllstoffe zugegeben werden können.

Eine derartige Mischung läßt sich gemäß dem gleichfalls vorgeschlagenen Verfahren dadurch einfach und kostengünstig herstellen, daß die Thermoplaste und das Blähgraphit in einem Extruder gemischt werden, wobei die Mischung nur auf eine solche Temperatur erwärmt wird, die unterhalb der Reaktionstemperatur für das Blähgraphit liegt.

Als Thermoplaste werden vorteilhaft Polyethylen sowie Polystyrol eingesetzt, wobei beide Stoffe vorteilhaft in Granulatform dem Extruder zugeführt werden. Es hat sich weiterhin als vorteilhaft herausgestellt, wenn das Granulat aus Thermoplasten und Blähton zuvor vermischt wird.

Als weitere vorteilhafte Verfahrensmaßnahme hat sich gezeigt, daß die Mischung des Thermoplastes mit dem Blähgraphit stufenweise erfolgen sollte, wobei vorteilhaft je zwei Stufen eingesetzt werden, in denen der Blähgraphit dem Polyester nacheinander zugegeben wird.

Die Temperatur, auf die der Extruder bzw. die Extruder erwärmt werden, wird so eingestellt, daß die erzeugte intumeszierende Mischung nur auf eine Temperatur erwärmt wird, die einen ausreichenden Abstand zur Reaktionstemperatur hat.

Vorteilhaft ist es ferner, wenn die aus dem Extruder austretenden und noch plastisch verformbare intumeszierende Mischung unmittelbar in eine Form eingepreßt wird, so daß in einem kontinuierlichen Arbeitsgang ein intumeszierender Formkörper erstellt werden kann. Auf diese Weise ist es möglich, mit einem vergleichsweise kostengünstigen Verfahren erfindungsgemäße intumeszierende Formteile zu erstellen, die keine Vormischung erfordern, wobei kurze Taktzeiten erreichbar sind und keine Reaktion und Trocknungszeiten abgewartet werden müssen. Darüber hinaus ist es möglich, komplexe Formen herzustellen. Diese Formteile zeichnen sich durch eine sehr gute Witterungsbeständigkeit und eine sehr gute Wasserbeständigkeit aus und haben zudem noch glatte und dichte Oberflächen. Hierdurch wird deren Reinigung wesentlich erleichtert und, sofern diese in Kernkraftwerken oder Krankenhäusern, etc. eingesetzt werden, können diese leicht dekontaminiert werden.

Darüber hinaus ist es auch möglich, einen intumeszierenden Polyethylenschaum zu einem Formkörper zu verarbeiten. Hierdurch ist eine gewisse Material- und Gewichtseinsparung möglich.

## Patentansprüche

1. Mischung für die Herstellung intumeszierender Formteile gekennzeichnet durch folgende Zusammensetzung in Gew.-%
30 - 60 % Thermoplaste
40 - 70 % Blähgraphit

2. Mischung nach Anspruch 1, dadurch gekennzeichnet, daß der Mischung Füllstoffe, vorzugsweise anorganische Füllstoffe zugesetzt sind.

3. Mischung nach einem der Ansprüche 1 oder 2, dadurch gekennzeichnet, daß als Thermoplaste Polyethylen, Polypropylen, Polyvinylchlorid oder Polystyrol eingesetzt wird.

4. Mischung nach einem der Ansprüche 1 bis 3, dadurch gekennzeichnet, daß die Korngröße des Blähgraphites zwischen 0,05 - 2,5 mm und die Korngröße der Thermoplaste zwischen 3 - 5 mm beträgt.

5. Verfahren für die Herstellung von Mischungen für intumeszierende Formteile nach Anspruch 1, dadurch gekennzeichnet, daß die Thermoplaste und das Blähgraphit im Extruder gemischt werden, wobei die Mischung nur auf eine solche Temperatur erwärmt wird, daß sie unterhalb der Reaktionstemperatur für das Blähgraphit liegt.

6. Verfahren nach Anspruch 5, dadurch gekennzeichnet, daß die Herstellung der Endmischung in zumindest zwei Stufen erfolgt.

7. Verfahren nach einem der Ansprüche 5 bis 6, dadurch gekennzeichnet, daß das Thermoplast in Granulatform in Korngrößen von 4 mm eingesetzt wird.

8. Verfahren nach einem der Ansprüche 5 bis 7, dadurch gekennzeichnet, daß das in Granulatform vorliegende Thermoplast und der Blähgraphit vor Aufgabe in den Extruder vermischt wird.

9. Verfahren nach einem der Ansprüche 5 bis 8, dadurch gekennzeichnet, daß die aus dem Extruder austretende Mischung unmittelbar in eine Form gepreßt wird.

10. Intumeszierendes Formteil, dadurch gekennzeichnet, daß es aus einer Mischung gemäß einem der Ansprüche 1 bis 4 hergestellt ist.
